# EUROPEAN PATENT APPLICATION

(11) **EP 4 742 045 A1**
(43) Date of publication of application: **13.05.2026**
(21) Application number: 25212929.1
(22) Date of filing: 03.11.2025
(51) Int. Cl.: G06F 11/34, G06F 16/958, G06F 40/30

(54) **SEMANTIC SEGMENTATION OF A SEQUENCE OF CONTENT CATPURES IN A DESKTOP ENVIRONMENT**

(30) Priority: 11.11.2024 US 202418943518
(71) Applicant: Microsoft Technology Licensing, LLC, Redmond, WA 98052 (US)
(72) Inventor: KRAL, Kyle Thomas, Redmond, Washington, 98052 (US); PURI, Yohann, Redmond, Washington, 98052 (US); ZHONG, Si Cheng, Redmond, Washington, 98052 (US)
(74) Representative: CMS Cameron McKenna Nabarro Olswang LLP

(57) **Abstract**

The techniques disclosed herein provide a system for segmenting a sequence of content captures (e.g., screenshots) of a desktop environment based on a semantic relationship between individual content captures. Generally described, the system generates a numerical representation (e.g., an embedding) of a content capture in the sequence. The numerical representation is then compared against numerical representations of neighboring content captures to detect changes in user activity such as switching activities. Accordingly, the system calculates a difference metric that quantifies the level of change between content captures and compares these difference metrics against a threshold difference metric to identify such changes in user activity. In the event at least one difference metric satisfies the threshold difference metric, the system partitions the sequence of content captures to generate at least a first segment and a second segment. The segments are then rendered in an interactive timeline interface.

## Description

### BACKGROUND

More and more of daily life occurs through computing devices, from completing assignments for work and school, to planning vacations, and online shopping. As such, a user may utilize a diverse array of software applications to accomplish various tasks. Moreover, a given software application can be transformed by different contexts. For instance, an internet browser can be utilized to look up nearby restaurants at one moment and research information for a presentation at another moment. Consequently, the user may lose track of what they were doing at a given moment as well as the context of that activity. To aid users in retracing their steps, many software applications include features for searching and retrieving content and/or activity, such as the browsing history in an internet browser and/or a listing of recent files in a file explorer.

However, existing features such as keyword-based searches, folder hierarchies, and app-specific organization tools may lack the ability to record context and decipher user intent. For example, a user may attempt a keyword search to recover a source of information for citation in a presentation. Unfortunately, the lack of specificity in existing approaches may prevent the user from finding the information for which they are looking. Moreover, such features place an additional burden on the user to remember exact details about their past activity such as the name of a website, title of an article, or other information. Manual recollection can be especially challenging due to the sheer amount of information the user generates and interacts with. That is, many existing systems place the onus on the user to spend time manually organizing, categorizing, and documenting information rather than accomplishing the tasks they wish to complete.

It is with respect to these and other considerations that the disclosure made herein is presented.

### SUMMARY

The techniques disclosed herein provide a partitioning system for segmenting a sequence of content captures (e.g., screenshots) utilizing a semantic relationship between individual content captures to detect changes in user activity and intent. As mentioned above, the sheer volume of user activity that occurs on computing devices (e.g., laptops, desktops, tablets) can render manual activity recollection overly burdensome and even unfeasible. To that end, end user experiences have streamlined activity recall operations by collecting, with the consent of the user, records of user activity such as a content captures of a desktop environment. Content captures enable an accurate recollection of moments of interest in past user activity thereby enhancing user engagement and productivity. In addition, content captures can be grouped, for example, in an interactive user activity timeline that renders such groups as various segments representing user activity sessions delineating a period of substantially continuous user interaction with a given software application, for example.

However, generating groups of content captures may be a difficult balance between grouping accuracy and quick processing times. For instance, accurately grouping content captures by topic (e.g., vacation planning, online shopping) may require significant processing from advanced artificial intelligence models (e.g., a small language model, a large language model). Conversely, grouping content captures more generally, such as by software application (e.g., a text editor, a web browser, a music player), incurs much less processing costs but may also obscure semantic relationships that justify their own segments despite originating from the same application. For example, a user may open a web browser to shop for clothes and subsequently watch a movie via the web browser at a later point in time. Intuitively, these are two distinct activities that should be represented as separate segments despite originating from the same software application.

As such, the techniques presented herein enable segmenting content captures based on semantic relationships between individual content captures without requiring the elevated processing costs of advanced artificial intelligence models. That is, the present system segments sequences of content captures without requiring knowledge of the human-readable visual content of the content captures.

Within the context of the present disclosure, a sequence of content captures is a plurality of individual content captures that are ordered with respect to time. Stated another way, the sequence of content captures, when received by the partitioning system, is organized chronologically by when each content capture was generated. Generally described, a content capture is recording of a current state of a desktop environment during a given moment of interest that captures the content (e.g., images, text, audio) that the user was interacting with. Moreover, the desktop environment is a graphical user interface abstraction of an operating system that enables a user to intuitively interact with software applications on a computing device (e.g., a laptop, a personal computer, a smartphone, a tablet).

In general, an individual content capture is associated with a time of occurrence (e.g., a timestamp) defining when the content capture was generated by a content capture generation component of the operating system. In addition, the content capture generation component can be configured to generate a content capture at regular intervals (e.g., once every 30 seconds). With reference to the time of occurrence, the sequence of content captures can span a predetermined timeframe (e.g., an hour, a day). In various examples, the partitioning system can retrieve a sequence of content captures from the generation component at regular intervals for processing. For instance, the partitioning system can retrieve content captures from the past hour once per hour.

Accordingly, the partitioning system processes individual content captures in the sequence to generate a numerical representation of the onscreen content depicted therein. In a specific example, the numerical representation is a text and/or image embedding (e.g., a vector embedding) that captures the semantic content of the content capture to enable compatibility with computational analysis. By generating one or more embeddings of an individual content capture, the partitioning system can comparatively analyze the similarity of semantic content across the sequence of content captures to identify moments of transition that may indicate a new segment. In a specific example, an individual content capture results in a set of embeddings representing different aspects of the content capture. For instance, one embedding represents visible text content while another embedding represents visible image content.

In one example, the partitioning system compares the numerical representation of a given content capture against a numerical representation of a preceding content capture and a numerical representation of a subsequent content capture. Referred to as a sliding window, the partitioning system can accordingly evaluate a content capture within the context of the overall sequence of content captures to accurately identify moments of transition. For the sake of discussion, the sliding window presented herein is of fixed width (e.g., three content captures) that is centered on a current content capture. That is, for a sliding window having a width of three, an individual content capture within the sequence of content captures is compared against the content capture immediately preceding it and the content capture immediately following it. However, it should be understood that the fixed width of the sliding window can be adjusted as needed for various situations and may compare the preceding numerical representation and/or the subsequent numerical representation. In one example, the width of the sliding window is five in which two preceding content captures and two subsequent content captures are compared against the current content capture at the center of the sliding window.

Based on the comparison of the numerical representations within the sliding window, the partitioning system calculates a difference metric for the current content capture (e.g., the content capture at the center of the sliding window). That is, the difference metric quantifies a level of difference between the current content capture and the preceding content capture. In one example, an increase in the difference metric indicates that the current content capture is more different from the preceding content capture, while a decrease in difference metric indicates that the current content capture is less different from the preceding content capture.

Furthermore, the difference metric can also quantify the level of difference between the current content capture and the subsequent content capture. As mentioned above, the present techniques are directed to segmenting a sequence of content captures according to changes in onscreen content and shifts in user intent (e.g., transitioning between activities). For example, consider a current content capture that is different from a preceding content capture, resulting in an increased different metric. Accordingly, the difference metric can be further increased if the subsequent content capture is not different from the current capture. That is, the difference that occurred from the preceding content capture to the current content capture is sustained through to the subsequent content capture thereby justifying an increased difference metric.

The difference metric is then compared against a threshold difference metric to determine whether to segment the sequence of content captures at that point. That is, the threshold difference metric defines a level of difference indicating a substantive change within the desktop environment. In various examples, the threshold difference metric is configured based on the number of content captures in the sequence of the content captures. For instance, a sequence with a large number of content captures (e.g., 200 content captures) may require an increased threshold difference metric to prevent fragmentary segmentation in relation to a sequence with very few content captures (e.g., five content captures).

In one example, the partitioning system determines that the difference metric does satisfy the threshold difference metric. This indicates that the user (1) transitioned from a first activity as depicted in a preceding content capture to (2) a second activity as depicted in a current content capture and (3) remained in the second activity as depicted in a subsequent content capture. In this way, the partitioning system can prevent false positives in which the user briefly changes activity but returns to the prior activity, also known as denoising. In one example of noise, a user may be working on a document, briefly switch to a music player to change tracks, and then return to the document. Consequently, segmenting the sequence of content captures at such a moment may create visual clutter and confusion. Conversely, if the difference metric does not satisfy the threshold difference metric, the partition system advances the sliding window within the sequence of content captures to analyze a subsequent content capture. That is, the current content capture becomes the preceding content capture while the subsequent content capture becomes the current content capture.

In response to determining that the difference metric satisfies the threshold difference metric, the partitioning system accordingly segments the sequence of content captures creating at least a first segment and a second segment that is different from the first segment. These segments are then rendered in the interactive timeline user interface to intuitively communicate moments of transition in user activity. The user can then interact with the segments by scrolling through the timeline, selecting various segments, viewing content captures, and so forth. Moreover, by utilizing an embedding-based approach to analyze the semantic relationships between content captures the partitioning system enables segmentation based on changes in onscreen content and user intent without incurring the significant computational cost of advanced models (e.g., large language models). In this way, the present techniques enhance the efficiency of user computing devices such as laptops, desktop computers, and tablets.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 is a block diagram of a system for segmenting a sequence of content captures based on a comparative analysis of the semantic relationship between individual content captures of the sequence.
FIG. 2A illustrates aspects of a sliding window approach for determining positions for segmenting a sequence of content captures.
FIG. 2B illustrates additional aspects for assigning an embedding profile to individual content captures based on the sliding window approach for segmentation.
FIG. 3 illustrates an example user interface rendering the interactive timeline and the segments therein.
FIG. 4 illustrates functionality of an example user interface using the segments of the interactive timeline and optional downstream tools.
FIG. 5 is a flow diagram showing aspects of a routine for segmenting a sequence of content captures based on a semantic relationship between individual content captures.
FIG. 6 is a computer architecture diagram illustrating an illustrative computer hardware and software architecture for a computing system capable of implementing aspects of the techniques and technologies presented herein.

### DETAILED DESCRIPTION

The techniques presented herein provide a partitioning system for segmenting a sequence of content captures (e.g., screenshots) at moments of transition in user activity. Such moments of transition are identified based on a semantic relationship between neighboring content captures, such as in preparation for rendering in an interactive timeline user interface. As mentioned above, the sequence of content captures is a plurality of content captures (e.g., screenshots) depicting a desktop environment and is ordered with respect to time. In various examples, a content capture generation component of the operating system generates a content capture in response to moments of interest and/or at regular intervals (e.g., once every ten seconds). By intelligently segmenting the sequence of content captures based on semantic relationships, the partitioning system enables segmentation based on changes in onscreen content and user intent without incurring the significant computational cost of advanced models (e.g., large language models). In this way, the present techniques enhance the efficiency of user computing devices such as laptops, desktop computers, and tablets.

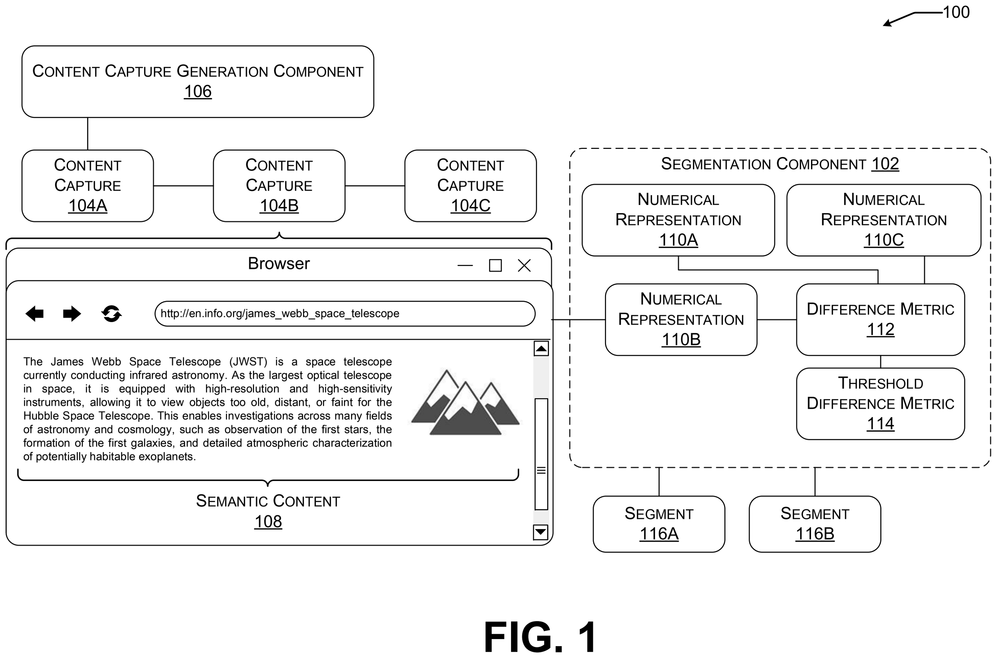

Various examples, scenarios, and aspects related to the techniques are described below with respect to FIGS. 1-6.

FIG. 1 illustrates a partitioning system 100 in which a segmentation component 102 retrieves a sequence of content captures 104A-104C from a content capture generation component 106. Within the context of the present disclosure, the segmentation component 102 and the content capture generation component 106 are operating system components that enable user activity recall, such as via an interactive timeline user interface. Generally described, an individual content capture 104B depicts a current state (e.g., the visual content) of a desktop environment and/or a software application (e.g., a web browser) during a specific moment in time. In addition, the content capture 104B includes semantic content 108 such as text, images, and the like.

As such, the segmentation component 102 can identify moments of transition within the sequence of content captures 104A-104C by comparing an individual content capture 104B against a preceding content capture 104A and/or a subsequent content capture 104C. This is accomplished by generating numerical representations 110A-110C of the respective content captures 104A-104C. More specifically, a given numerical representation 110B captures the semantic content 108 of the corresponding content capture 104B in a format that is compatible for computational analysis. In various examples, the numerical representations 110A-110C represent the corresponding content capture 104A-104C using a set of vectors (e.g., a continuous vector space).

Often referred to as embeddings (e.g., text/word embedding, image embedding), the numerical representations 1 10A-110C are generated such that content captures containing similar semantic content result in similar numerical representations. Consider a specific example using text. The word "table" can have different meanings (e.g., its semantic value) depending on the surrounding context. That is, "table" in "table a discussion" does not mean the same as "table" in a "dining table". As such, embedding the word "table" as the same numerical representation in both contexts would be inappropriate for the sake of semantic similarity. Likewise, the same principle applies to the numerical representations 110A-110C of the content captures 104A-104C. Furthermore, the numerical representations 110A-110C can also include system metadata to embed additional user context (e.g., time of day, application type, location).

Consequently, the numerical representations 110A-110C enable the partitioning system 100 to identify semantic similarities irrespective of topics that may or may not share an overarching meaning. Consider a situation in which a user is working on a "budget proposal for Contoso Corp." project. Accordingly, the user may interact with text documents, spreadsheets, emails, and other information related this project. Intuitively, the concept (e.g., topic) of a "budget proposal for Contoso Corp." is nebulous and thus it may be infeasible for computational models such as small and/or large language models to identify which content captures 104A-104B belong within the concept. In contrast, by utilizing the numerical representations 110A-110C, the partitioning system 100 can identify semantic relationships between the content captures 104A-104C without requiring an explicit definition and/or inference of a shared topic and/or concept.

Moreover, the numerical representations 110A-110C can be generated within the context of an individual user's specific activity history. That is, as more content captures 104 are generated over time, the partitioning system 100 can gradually adjust the generation of numerical representations 110 as a reflection of the semantic tendencies and trends within the growing activity history. As such, the partitioning system 100 customizes itself to a user's personalized context and activity history.

Subsequently, the segmentation component 102 compares the numerical representation 110B of the individual content capture 104B against the numerical representation 110A of a preceding content capture 104A and/or the numerical representation 110C of a subsequent content capture 104C to calculate a difference metric 112. Generally described, the difference metric 112 is a numerical value that quantifies a level of change among the sequence of content captures 104A-104C. More specifically, the level of change from the preceding content capture 104A to the current content capture 104B and/or the level of change from the current content capture 104B to the subsequent content capture 104C. For example, an increase in difference metric 112 indicates that the content capture 104B is more different from the preceding content capture 104A whereas a decrease in difference metric 112 indicates that the current content capture 104B is less different from the preceding content capture 104A.

As mentioned above, the partitioning system 100 is directed to segmenting a sequence of content captures 104A-104C according to changes in onscreen content and shifts in user intent (e.g., transitioning between activities). For example, consider a current content capture 104B that is different from a preceding content capture 104A, resulting an increased different metric 112. Accordingly, the difference metric 112 can be further increased if the subsequent content capture 104C is not different from the current capture. That is, the difference that occurred from the preceding content capture 104A to the current content capture 104B is sustained through to the subsequent content capture 104C thereby justifying an increased difference metric 112.

The segmentation component 102 then compares the difference metric 112 against a threshold difference metric 114 that defines a minimum level of change that indicates that the user (1) transitioned from a first activity as depicted in a preceding content capture 104A to (2) a second activity as depicted in a current content capture 104B and (3) remained in the second activity as depicted in a subsequent content capture 104C. In the event the difference metric 112 satisfies the threshold difference metric 114, the segmentation component 102 partitions the sequence of content captures 104A-104C at the position of the current content capture 104B (e.g., between the content captures 104A and 104B). In this way, the segmentation component 102 generates a first segment 116A that includes the first content capture 104A and a second segment 116B that includes the content captures 104B and 104C. In various examples, the threshold difference metric 114 is configured based on the number of content captures in the sequence of the content captures 104A-104C. For instance, a sequence with a large number of content captures (e.g., 200) may require an elevated threshold difference metric 114 to prevent fragmentary segmentation in relation to a sequence with very few content captures (e.g., five).

It should be understood that the example of FIG.1 assumes a sequence of content captures 104A-104C that has not been previously partitioned. Thus, the described partitioning results in a first segment 116A and a second segment 116B. In a more general manner, the sequence of content captures 104A-104C is partitioned such that individual segments 116A and 116B include content captures 104 containing similar semantic content 108 in accordance with the threshold difference metric 114. However, it should be further understood that the sequence of content captures 104A-104C can be partitioned in any suitable manner based on the comparative analysis of the numerical representations 110A-110C of the sequence of content captures 104A-104C described above.

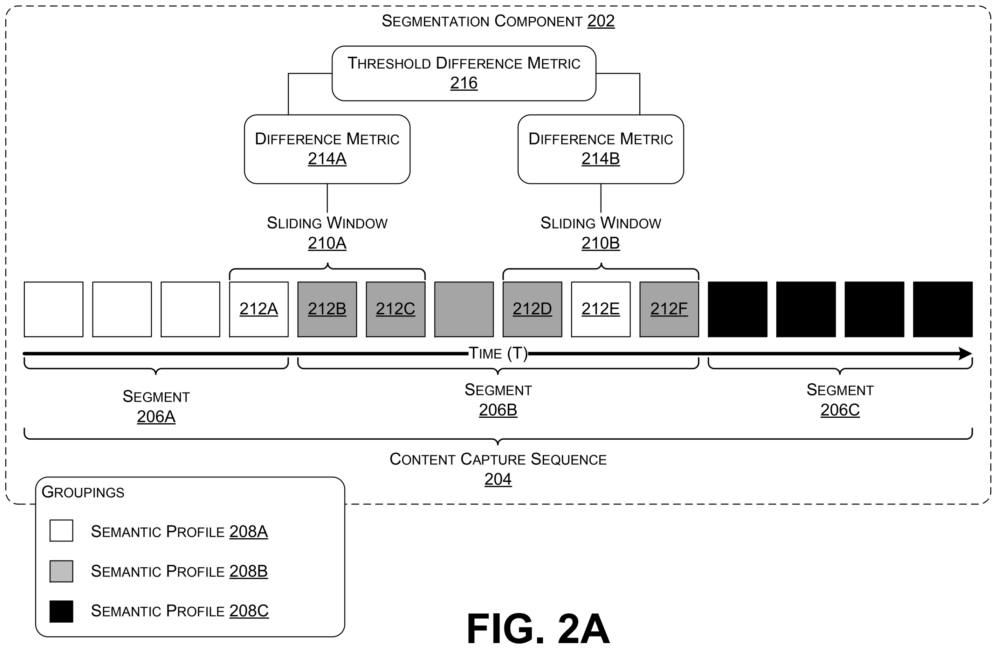

Turning now to FIG. 2A, additional aspects of a segmentation component 202 that analyzes and segments a sequence of content captures 204 are shown and described. Similar to the examples described above, the sequence of content captures 204 is a plurality of content captures that are ordered with respect to time. As shown, the sequence of content captures 204 proceeds from left to right in chronological order as indicated by an arrow representing Time (T). In addition, the sequence of content captures 204 is partitioned into three segments 206A-206C. Moreover, the sequence of content captures 204 is illustrated as a plurality of individual squares each portraying an individual content capture, in particular, a numerical representation of the individual content capture (e.g., a text embedding, an image embedding). As described above, a numerical representation converts the semantic content of the corresponding content capture into a format that is compatible with computational analysis systems, such as a vector space representation. In various examples, an individual content capture can be referred to as a frame, as part of a greater record of user activity, the sequence of content captures 204, analogous to a frame in a video.

In addition, each content capture can be grouped according to a semantic profile 208A-208C which is illustrated in FIG. 2A as a color code. Generally described, the individual semantic profiles 208A-208C enable the segmentation component 202 to group together content captures having similar semantic content based on their associated numerical representations. In this way, the semantic profiles 208A-208C can streamline similarity analyses. In addition, as will be discussed further below, the semantic profiles 208A-208C can further enable user activity recall systems to provide insights into past user activity and potentially helpful suggestions. It should be understood that while the semantic profiles 208A-208C group content captures having similar semantic content, this similarity is identified based on the numerical representations (e.g., embeddings) of each content capture and is not a categorization based on an identified shared topic (e.g., skiing, shopping).

As mentioned, the sequence of content captures 204 is partitioned into a plurality of segments 206A-206C. This is accomplished by traversing the sequence of content captures 204 to identify moments of transition in user activity as described above with respect to FIG. 1. In one example, the segmentation component 202 utilizes a sliding window 210A having a fixed width to analyze the content capture sequence 204. In the present example, the sliding window 210A is configured with a width of three (e.g., three content captures). That is, the sliding window 210A compares a current content capture 212B against a preceding content capture 212A and a subsequent content capture 212C. More specifically, the segmentation component 202 compares the numerical representations of the content captures 212A-212C to calculate a difference metric 214A quantifying a level of change from the preceding content capture 212A to the current content capture 212B as well as quantifying a level of change from the current content capture 212B to the subsequent content capture 212C.

Similar to the example discussed above, the difference metric 214A can be increased in the event the current content capture 212B is different from the preceding content capture 212A and similar to the subsequent content capture 212C. This indicates that the user transitioned away from a first activity depicted in the preceding content capture 212A to a second activity depicted in the current content capture 212B and maintained engagement with the second activity as depicted in the subsequent content capture 212C. Stated another way, this signals that the user intent has switched and been sustained. Accordingly, the segmentation component 202 can determine that the difference metric 214A satisfies a threshold difference metric 216. In response, the segmentation component 202 partitions the content capture sequence 204 at the current content capture 212B creating the first segment 206A and the second segment 206B.

In another example, the segmentation component 202 utilizes a sliding window 210B to compare a current content capture 212E against a preceding content capture 212D and a subsequent content capture 212F to calculate a difference metric 214B. With respect to the sliding window 210A, the sliding window 210B is more advanced in time. That is, given a sliding window 210 that traverses the sequence of content captures 204 one by one, the sliding window 210B is four steps after the sliding window 210A.

As in the above example, the difference metric 214B is a numerical value that quantifies a level of change from the preceding content capture 212D to the current content capture 212E as well as a level of change from the current content capture 212E to the subsequent content capture 212F. As indicated by the color code shading, the preceding content capture 212D and the subsequent content capture 212F belong to the semantic profile 208B while the current content capture 212E belongs to the semantic profile 208A. That is, the current content capture 212E is different from the preceding content capture 212D and also different from the subsequent content capture 212F. As such, the difference metric 214B can be increased due to the difference from the preceding content capture 212D to the current content capture 212E. However, the difference metric 214B can also be decreased by the segmentation component 202 due to the difference from the current content capture 212E and the subsequent content capture 212F.

That is, while the user (1) transitioned from a first activity depicted in the preceding content capture 212D to a (2) second activity depicted in the current content capture 212E, the user did not (3) maintain engagement with the second activity as indicated by the subsequent content capture 212F. Accordingly, the segmentation component 202 determines that the difference metric 214B does not satisfy the threshold difference metric 216. Consequently, the segmentation component 202 does not partition the sequence of content captures 204 at the position of the current content capture 212E. This is reflected in the position of the second segment 206B and the third segment 206C. Accordingly, the sliding window 210B advances to the subsequent content capture 212F. In some scenarios, the segmentation component 202 can be configured to retain previous analyses when the sliding window 210 traverses the sequence of content captures 204 one by one. For instance, having determined that the content capture 212E is different from the content capture 212F, the segmentation component 202 can cache the result to avoid repeating the comparison when calculating a difference metric for the content capture 212F.

In this way, the segmentation component 202 can ensure that neighboring content captures of a similar semantic profile 208A-208C are segmented together while preventing extraneous segmentation that does not reflect true transitions in user intent. However, it should be understood that the threshold difference metric 216 can be adjusted to suit the context of the sequence of content captures 204. In one example, the threshold difference metric 216 is configured based on the number of content captures in the sequence of the content captures 204. For instance, a sequence 204 with a large number of content captures (e.g., 200) may require an elevated threshold difference metric 216 to prevent fragmentary segmentation in relation to a sequence 204 with very few content captures (e.g., five).

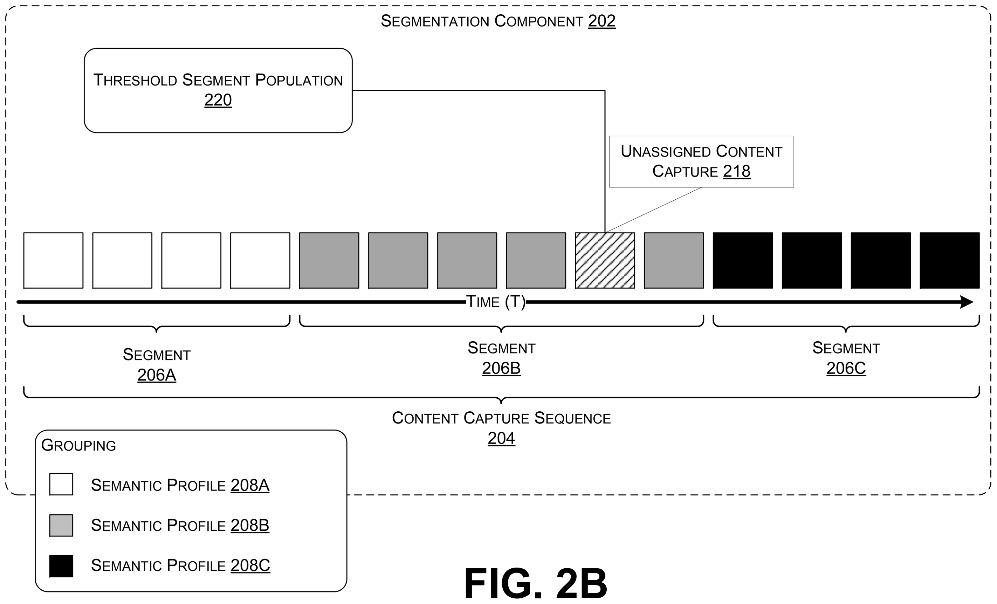

Turning now to FIG. 2B, an example of downstream utilization of the embedding profiles 208A-208C is shown and described. As described above, the segmentation component 202 partitions the sequence of content captures 204 such that the content captures in each segment 206A-206C share similar semantic content. This semantic similarity is illustrated herein via the color-coded semantic profiles 208A-208C. However, there may be situations in which a content capture is an unassigned content capture 218 for which the segmentation component 202 cannot confidently assign one of the semantic profiles 208A-208C. That is, the numerical representation of the unassigned content capture 218 may not satisfy a threshold similarity to other content captures of the sequence of the content captures 204 to be assigned a semantic profile 208A-208C.

In various examples, the segmentation component 202 can assign the unassigned content capture 218 a semantic profile 208B based on the semantic profile 208B of the neighboring content captures within the segment 206B and a threshold segment population 220. The threshold segment population 220 defines a minimum number of content captures within a given segment to confidently assign one of the semantic profiles 208A-208C. For instance, the second segment 206B includes six content captures, five of which are assigned the semantic profile 208B. As such, the segmentation component 202 can determine that the unassigned content capture 218 most likely follows the trend established by the other five content captures within the segment 206B.

In a different example, the number of content captures in the segment 206B does not satisfy the threshold segment population 220. Consequently, the segmentation component 202 does not assign one of the semantic profiles 208A-208C to the unassigned content capture 218. In this way, the threshold segment population 220 enables the segmentation component 202 to group content captures in a lightweight manner, without incurring the heavy processing cost of deeper analysis tools such as a large language model. Stated another way, the semantic profiles 208A-208C and the threshold segment population 220 enable the segmentation component 202 to form basic groupings for the sequence of content captures 204 without requiring knowledge of the actual visual content (e.g., text content, image content) of the individual content captures.

Moreover, the semantic profiles 208A-208C can improve the efficiency of downstream classification and analysis tools (e.g., small language models, large language models) by providing an initial classification of incoming content captures. As such, the semantic profiles 208A-208C can then be refined by these downstream classification and analysis tools into well-defined topics (e.g., "skiing", "online shopping"). That is, rather than require the downstream classification and analysis tools to wholly generate classifications, the segmentation component 202 can reduce processing times by providing the semantic profiles 208A-208C.

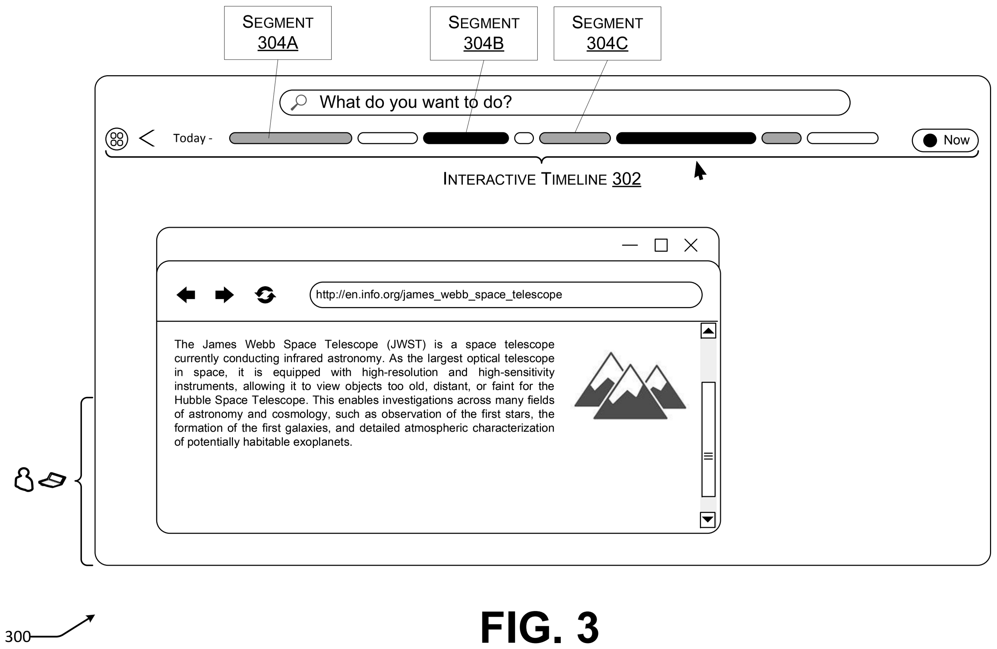

Proceeding now to FIG. 3, aspects of an example graphical user interface 300 of a desktop environment enabling a user to access an interactive timeline 302 are shown and described. As shown, the interactive timeline 302 includes a plurality of segments 304A-304C which are generated by a segmentation component of the operating system in the manner described above. As also mentioned above, the segments 304A-C can be color-coded based on a semantic profile. Generally described, the color coding indicates that segments 304A and 304C contain similar semantic content as they share the same color. However, it should be understood that the segmentation component can assign the semantic profile based on a numerical representation of said semantic content (e.g., a text embedding, an image embedding) without knowledge of the original visual content (e.g., text content, image content).

In various examples, the rendering of the interactive timeline 302 is configured to display a specific timespan (e.g., an hour, a day, a week). As shown in FIG. 3, the interactive timeline 302 illustrates user activity from the current day ("Today"). Accordingly, the segments 304A-304C are scaled within the rendering of the interactive timeline 302 based on the specific timespan. For instance, when the timespan is a current day (e.g., hours), the segments 304A-304C can be rendered in the scale of minutes and/or hours.

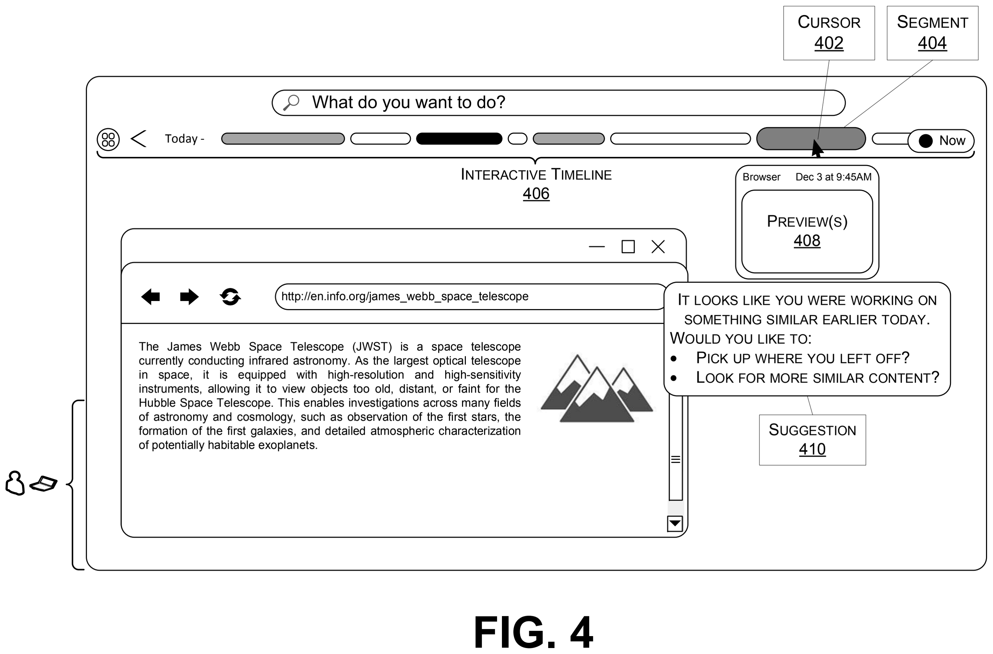

Turning to FIG. 4, a user can utilize a cursor 402 to select a segment 404 of the interactive timeline 406. In response, the interactive timeline 406 displays a preview 408 of a content capture that is included in the selected segment 404 to present an example of the semantic content therein. In addition, the preview can include a suggestion 410 based on the semantic profile of the selected segment 404. As shown in FIG. 4, the segments of the interactive timeline 406 are color-coded as described above to indicate the semantic profile of each segment. Accordingly, the suggestion can direct the user to a past segment of the interactive timeline 406 that contains similar semantic content (e.g., the same semantic profile).

Furthermore, the user can optionally invoke additional analysis tools to receive deeper insight into their past activity. In one example, the user can decide to pick up where they left off and return to a previous segment identified in the suggestion 410 to review similar activity from the past. Accordingly, the user invokes the analysis tool by activating (e.g., clicking, tapping) "Pick up where you left off" within the suggestion 410. In another example, the user can invoke an advanced analysis tool such as a small language model and/or a large language model to perform a deeper linguistic analysis of content captures to uncover additional instances of similar content and/or provide additional insight by activating "Look for more similar content?" within the suggestion 410. In other examples, the user can invoke an additional analysis tool by clicking on the preview to surface a context menu presenting various options, such as requesting the analysis tool to assign a topic and/or identify other aspects of the content capture and/or the segment 404. That is, while the present system can quickly segment a sequence of content captures, a user may desire further analysis that incurs lengthier processing times to deliver more sophisticated analysis of past activity.

In one example, the user invokes a generative artificial intelligence model (e.g., a small language model, a large language model) to categorize segments based on the content captures within a specific segment 404 or multiple segments. In various examples, the generative artificial intelligence model categorizes a segment 404 according to information depicted in a majority of the constituent content captures (e.g., a majority "vote"). For instance, consider a segment 404 that includes ten content captures. In this example, assume the user is researching activities for an upcoming vacation. The user can invoke the generative artificial intelligence model to identify a topic for the segment 404 based on the information that is depicted in the ten content captures (e.g., a "travel" topic). Accordingly, the generative artificial intelligence model may identify that eight of the ten content captures depict a "travel" topic while two of the ten content captures depict a "dining" topic. In response, the segment 404 is categorized under the "travel" topic and not the "dining" topic.

Consequently, by empowering the user to optionally invoke advanced analysis tools rather than applying such tools in all cases (e.g., every incoming content capture), the present techniques significantly reduce computing resource consumption thereby improving the efficiency and longevity (e.g., battery life) of personal computing devices. Moreover, categorizing a segment 404 containing multiple content captures on a majority basis reduces instances of false positives in which an assigned topic for a single content capture is inaccurate and/or fails to account for the broader context provided by surrounding content captures. For instance, returning to the above example, the two content captures that depict a "dining" topic may be accurately labeled (e.g., the user was researching restaurants for their vacation). However, categorizing the segment 404 as a whole under the "dining" topic rather than the "travel" topic would nonetheless be inaccurate as the user was exploring the "dining" topic within the context of "travel".

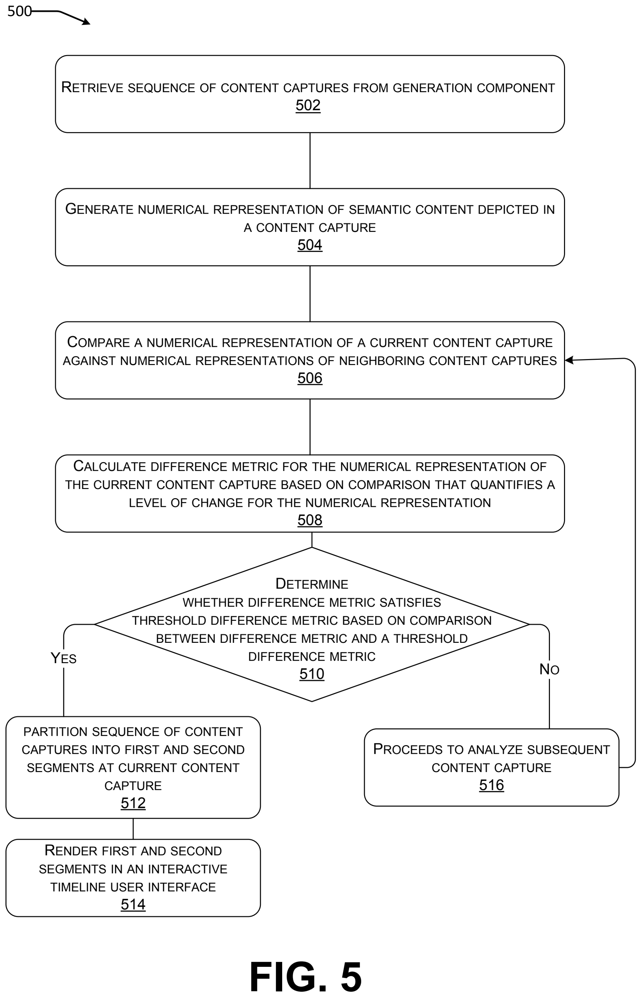

Turning now to FIG. 5, aspects of a process 500 for segmenting a sequence of content captures based on a semantic relationship between individual content captures within the sequence are illustrated. With respect to FIG. 5, the process 500 begins at operation 502 where a segmentation component of an operating system retrieves a sequence of content captures from a content capture generation component. As described above, the sequence of content captures is a plurality of content captures (e.g., screenshots) that are ordered with respect to time. As such the sequence of content captures depicts the state of a user desktop environment at various moments in time spanning a certain time period (e.g., an hour, a day, a week). Furthermore, the content capture generation component can be configured to generate a content capture at regular intervals (e.g., every thirty seconds) and/or dynamically in response to changes in system state (e.g., logging in, logging out, turning on an input device).

Next, at operation 504, the segmentation component generates a numerical representation of the semantic content depicted in an individual content capture of the sequence. As discussed above, the numerical representation can be a text and/or image embedding that formats the semantic content of a given content capture for compatibility with computational analysis techniques. Moreover, the numerical representations can also include system metadata to provide additional context to the semantic content capture therein.

Then, at operation 506, the segmentation component compares a numerical representation of a current content capture (e.g., the center of a sliding window) against numerical representations of neighboring content captures. In one example, the segmentation component compares the numerical representation against a numerical representation of a preceding content capture and a numerical representation of a subsequent content capture. In this way, the segmentation component can avoid segmenting the sequence of content captures at positions that do not reflect true changes in user intent (e.g., momentarily switching different tabs in a web browser). Conversely, the segmentation component can compare the current numerical representation against a numerical representation of a preceding content capture only to detect all changes within the desktop environment. In this way, the segmentation component provides significant granularity should the user so desire.

Proceeding to operation 508, the segmentation component calculates a difference metric for the numerical representation of the current content capture based on the aforementioned comparison that quantifies a level change for the individual numerical representation. As described above, an increase in the difference metric indicates that the current content capture is more different from the preceding content capture in relation to a decreased difference metric which indicates that the current content capture is less different from (e.g., similar to) the preceding content capture.

Subsequently, at operation 510, the segmentation component compares the difference metric of each numerical representation against a threshold difference metric to determine whether the difference metric satisfies the threshold difference metric. In various examples, the threshold difference metric can be adjusted based on the context of the sequence of content captures. In a specific example, the threshold difference metric is adjusted based on the number of content captures within the sequence. For instance, the threshold difference metric is increased for sequences containing a large number of content captures (e.g., 100) thereby requiring significant changes in semantic content. In this way, the elevated threshold difference metric prevents over-segmentation thereby preventing potential visual clutter and/or user confusion. Conversely, the threshold difference metric can be depressed for sequences that contain a small number of content captures (e.g., ten) as a smaller sequence may require increased granularity (e.g., the number of segments) to expose changes in user behavior.

In the event the difference metric satisfies the threshold difference metric, the process 500 proceeds to operation 512 in which the segmentation component partitions the sequence of content captures to generate a first segment and a second segment. As described above, satisfying the threshold difference metric indicates that the user (1) transitioned from a first activity as depicted in a preceding content capture to (2) a second activity as depicted in a current content capture and (3) remained in the second activity as depicted in a subsequent content capture thereby justifying the partitioning.

Then, at operation 514, the segmentation component passes the first segment and the second segment for rendering in an interactive timeline user interface for viewing the by user. In addition, these segments can be rendered with a color code to indicate similar semantic content between various segments to provide a further streamlined user experience.

Conversely, in the event the difference metric does not satisfy the threshold difference metric, the process 500 proceeds to operation 516 in which the segmentation component does not partition the sequence of content captures and proceeds to analyze the subsequent content capture. For instance, with respect to the sliding window analyses described above, the sliding window shifts to the subsequent content capture in the sequence (e.g., shifts the sliding window to the subsequent content capture and returns to operation 506).

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can begin and/or end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the process 500 can be implemented, at least in part, by modules running the features disclosed herein can be a dynamically linked library, a statically linked library, functionality produced by an application programing interface, a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the process 500 may also be implemented in other ways. In addition, one or more of the operations of the process 500 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

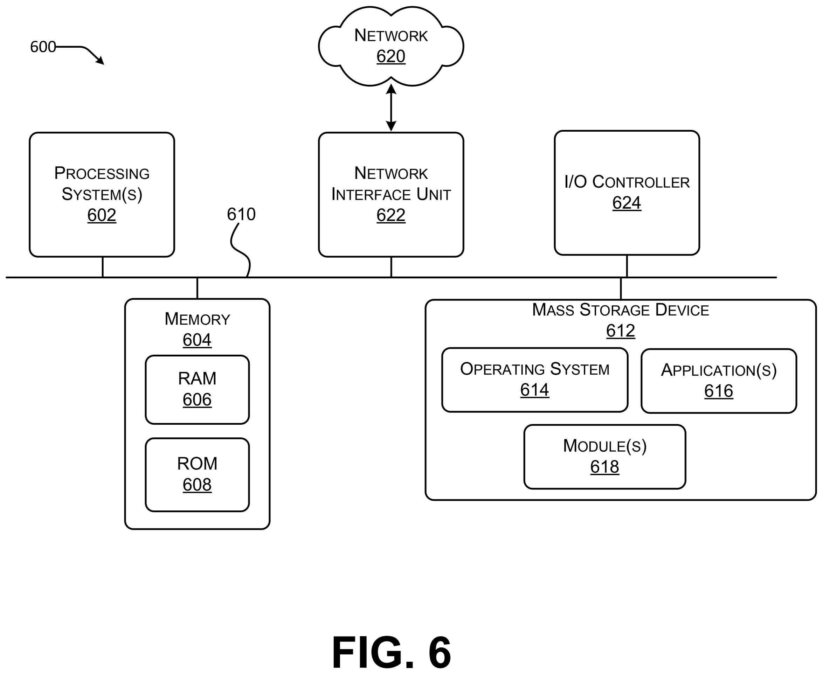

FIG. 6 shows additional details of an example computer architecture 600 for a device, capable of executing computer instructions (e.g., a module or a program component described herein). The computer architecture 600 illustrated in FIG. 6 includes processing system 602, a system memory 604, including a random-access memory 606 (RAM) and a read-only memory (ROM) 608, and a system bus 610 that couples the memory 604 to the processing system 602. The processing system 602 comprises processing unit(s).

Processing unit(s), such as processing unit(s) of processing system 602, can represent, for example, a CPU-type processing unit, a GPU-type processing unit, a field-programmable gate array, another class of digital signal processor (DSP), or other hardware logic components that may, in some instances, be driven by a CPU. For example, illustrative types of hardware logic components that can be used include Application-Specific Integrated Circuits, Application-Specific Standard Products, System-on-a-Chip Systems, Complex Programmable Logic Devices, and the like.

A basic input/output system containing the basic routines that help to transfer information between elements within the computer architecture 600, such as during startup, is stored in the ROM 608. The computer architecture 600 further includes a mass storage device 612 for storing an operating system 614, application(s) 616, modules 618, and other data described herein.

The mass storage device 612 is connected to processing system 602 through a mass storage controller connected to the bus 610. The mass storage device 612 and its associated computer-readable media provide non-volatile storage for the computer architecture 600. Although the description of computer-readable media contained herein refers to a mass storage device, the computer-readable media can be any available computer-readable storage media or communication media that can be accessed by the computer architecture 600.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 600 may operate in a networked environment using logical connections to remote computers through the network 620. The computer architecture 600 may connect to the network 620 through a network interface unit 622 connected to the bus 610. The computer architecture 600 also may include an input/output controller 624 for receiving and processing input from a number of other devices, including a keyboard, mouse, touch, or electronic stylus or pen. Similarly, the input/output controller 624 may provide output to a display screen, a printer, or other type of output device.

The software components described herein may, when loaded into the processing system 602 and executed, transform the processing system 602 and the overall computer architecture 600 from a general-purpose computing system into a special-purpose computing system customized to facilitate the functionality presented herein. The processing system 602 may be constructed from any number of transistors or other discrete circuit elements, which may individually or collectively assume any number of states. More specifically, the processing system 602 may operate as a finite-state machine, in response to executable instructions contained within the software modules disclosed herein. These computer-executable instructions may transform the processing system 602 by specifying how the processing system 602 transition between states, thereby transforming the transistors or other discrete hardware elements constituting the processing system 602.

The disclosure presented herein also encompasses the subject matter set forth in the following clauses.

Example Clause A, a method for segmenting a sequence of content captures depicting a desktop environment based on a semantic relationship between individual content captures of the sequence of content captures, the method comprising: receiving the sequence of content captures from a content capture generation component; for an individual content capture of the sequence of content captures: generating a numerical representation of a semantic content depicted in the individual content capture; comparing the numerical representation of the individual content capture against a preceding numerical representation of a preceding content capture and a subsequent numerical representation of a subsequent content capture; calculating a difference metric for the numerical representation of the individual content capture based on the comparison against the preceding numerical representation and the subsequent numerical representation, wherein the difference metric quantifies a level of change between the individual content capture, the preceding content capture, and the subsequent content capture; determining that the difference metric for the individual content capture satisfies a threshold difference metric indicating a substantive change in the desktop environment based on a comparison between the difference metric and the threshold difference metric; and in response to determining that the difference metric for the individual content capture satisfies the threshold difference metric, partitioning the sequence of content captures at the individual content capture into at least a first segment and a second segment; and rendering at least the first segment and the second segment within an interactive timeline user interface.

Example Clause B, the method of Example Clause A, wherein the content capture generation component generates an individual content capture at a regular time interval.

Example Clause C, the method of Example Clause A or Example Clause B, wherein: the first segment is associated with a first grouping of content captures; and the second segment is associated with a second grouping of content captures.

Example Clause D, the method of Example Clause C, wherein the sequence of content captures is a first sequence of content captures, the method further comprising: determining that a third segment within a second sequence of content captures is substantially similar to the first segment based on a numerical representation of content captures within the third segment; and in response to determining that the third segment is substantially similar to the first segment, associating the third segment with the first grouping of content captures.

Example Clause E, the method of Example Clause C, further comprising: detecting an unassigned content capture within the first segment that is associated with an undetermined grouping of content captures; determining that a number of content captures within the first segment associated with the first grouping of content captures satisfies a threshold number; and in response to determining that the number of content captures within the first segment associated with the first grouping of content captures satisfies the threshold number, associating the unassigned content capture with the first grouping of content captures.

Example Clause F, the method of any one of Example Clause A through Example Clause E, wherein: the first segment is rendered within the interactive timeline user interface in a first color; and the second segment is rendered within the interactive timeline user interface in a second color.

Example Clause G, the method of any one of Example Clause A through Example Clause F, wherein the numerical representation of the individual content capture is a vector embedding of onscreen content and system metadata.

Example Clause H, the method of any one of Example Clause A through Example Clause G, further comprising: receiving an external request for an additional analysis of the sequence of content captures; and in response to the external request, providing the sequence of content captures to an advanced analysis model.

Example Clause I, the method of any one of Example Clause A through Example Clause H, further comprising: assigning a first semantic profile to the first segment based on a semantic content of the first segment; assigning a second semantic profile to the second segment based on a semantic content of the second segment; detecting a third segment having the first semantic profile; and rendering a suggestion interface element in association with the interactive timeline interface, the suggestion interface element surfacing a semantic relationship between the first segment and the third segment based on the first semantic profile.

Example Clause J, a system for segmenting a sequence of content captures depicting a desktop environment based on a semantic relationship between individual content captures of the sequence of content captures, the system comprising: a processing system; and a computer-readable medium having encoded thereon computer-readable instructions that when executed by the processing system causes the system to perform operations comprising: receiving the sequence of content captures from a content capture generation component; for an individual content capture of the sequence of content captures: generating a numerical representation of a semantic content depicted in the individual content capture; comparing the numerical representation of the individual content capture against a preceding numerical representation of a preceding content capture and a subsequent numerical representation of a subsequent content capture; calculating a difference metric for the numerical representation of the individual content capture based on the comparison against the preceding numerical representation and the subsequent numerical representation, wherein the difference metric quantifies a level of change between the individual content capture, the preceding content capture, and the subsequent content capture; determining that the difference metric for the individual content capture satisfies a threshold difference metric indicating a substantive change in the desktop environment based on a comparison between the difference metric and the threshold difference metric; and in response to determining that the difference metric for the individual content capture satisfies the threshold difference metric, partitioning the sequence of content captures at the individual content capture into at least a first segment and a second segment; and rendering at least the first segment and the second segment within an interactive timeline user interface.

Example Clause K, the system of Example Clause J, wherein the content capture generation component generates an individual content capture at a regular time interval.

Example Clause L, the system of Example Clause J or Example Clause K, wherein: the first segment is associated with a first grouping of content captures; and the second segment is associated with a second grouping of content captures.

Example Clause M, the system of Example Clause L, wherein the sequence of content captures is a first sequence of content captures, the operations further comprising: determining that a third segment within a second sequence of content captures is substantially similar to the first segment based on a numerical representation of content captures within the third segment; and in response to determining that the third segment is substantially similar to the first segment, associating the third segment with the first grouping of content captures.

Example Clause N, the system of Example Clause L, wherein the operations further comprise: detecting an unassigned content capture within the first segment that is associated with an undetermined grouping of content captures; determining that a number of content captures within the first segment associated with the first grouping of content captures satisfies a threshold number; and in response to determining that the number of content captures within the first segment associated with the first grouping of content captures satisfies the threshold number, associating the unassigned content capture with the first grouping of content captures.

Example Clause O, the system of any one of Example Clause J through Example Clause N, wherein: the first segment is rendered within the interactive timeline user interface in a first color; and the second segment is rendered within the interactive timeline user interface in a second color.

Example Clause P, the system of any one of Example Clause J through Example Clause O, wherein the numerical representation of the individual content capture is a vector embedding of onscreen content and system metadata.

Example Clause Q, the system of any one of Example Clause J through Example Clause P, wherein the operations further comprise: assigning a first semantic profile to the first segment based on a semantic content of the first segment; assigning a second semantic profile to the second segment based on a semantic content of the second segment; detecting a third segment having the first semantic profile; and rendering a suggestion interface element in association with the interactive timeline interface, the suggestion interface element surfacing a semantic relationship between the first segment and the third segment based on the first semantic profile.

Example Clause R, a computer-readable storage medium having encoded thereon, computer-readable instructions that when executed by a system cause the system to perform operations comprising: receiving the sequence of content captures from a content capture generation component; for an individual content capture of the sequence of content captures: generating a numerical representation of a semantic content depicted in the individual content capture; comparing the numerical representation of the individual content capture against a preceding numerical representation of a preceding content capture; calculating a difference metric for the numerical representation of the individual content capture based on the comparison against the preceding numerical representation, wherein the difference metric quantifies a level of change between the individual content capture and the preceding content capture; determining that the difference metric for the individual content capture satisfies the threshold difference metric indicating a substantive change in the desktop environment based on a comparison between the difference metric and a threshold difference metric; and in response to determining that the difference metric for the individual content capture satisfies the threshold difference metric, partitioning the sequence of content captures at the individual content capture into at least a first segment and a second segment; and rendering the first segment and the second segment within an interactive timeline user interface.

Example Clause S, the computer-readable storage medium of Example Clause R, wherein: the first segment is associated with a first grouping of content captures; and the second segment is associated with a second grouping of content captures.

Example Clause T, the computer-readable storage medium of Example Clause S, wherein the sequence of content captures is a first sequence of content captures, the operations further comprising: determining that a third segment within a second sequence of content captures is substantially similar to the first segment based on a numerical representation of content captures within the third segment; and in response to determining that the third segment is substantially similar to the first segment, associating the third segment with the first grouping of content captures.

Example Clause U, a system for segmenting a sequence of content captures (e.g., screenshots) of a desktop environment based on a semantic relationship between individual content captures. Generally described, the system generates a numerical representation (e.g., an embedding) of a content capture in the sequence. The numerical representation is then compared against numerical representations of neighboring content captures to detect changes in user activity such as switching activities. Accordingly, the system calculates a difference metric that quantifies the level of change between content captures and compares these difference metrics against a threshold difference metric to identify such changes in user activity. In the event at least one difference metric satisfies the threshold difference metric, the system partitions the sequence of content captures to generate at least a first segment and a second segment. The segments are then rendered in an interactive timeline interface.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method for segmenting a sequence of content captures (104A-104C) depicting a desktop environment based on a semantic relationship between individual content captures (104A-104C) of the sequence of content captures (104A-104C), the method comprising:
receiving the sequence of content captures (104A-104C) from a content capture generation component (106);
for an individual content capture (104A-104C) of the sequence of content captures (104A-104C):
generating a numerical representation (110B) of a semantic content (106) depicted in the individual content capture (104B);
comparing the numerical representation (110B) of the individual content capture (104B) against a preceding numerical representation (110A) of a preceding content capture (104A) and a subsequent numerical representation (110C) of a subsequent content capture (104C);
calculating a difference metric (112) for the numerical representation (110B) of the individual content capture (104B) based on the comparison against the preceding numerical representation (110A) and the subsequent numerical representation (110C), wherein the difference metric (112) quantifies a level of change between the individual content capture (104B), the preceding content capture (104A), and the subsequent content capture (104C);
determining that the difference metric (112) for the individual content capture (104B) satisfies a threshold difference metric (114) indicating a substantive change in the desktop environment based on a comparison between the difference metric (112) and the threshold difference metric (114); and
in response to determining that the difference metric (112) for the individual content capture (104B) satisfies the threshold difference metric (114), partitioning the sequence of content captures (104A-104C) at the individual content capture (104B) into at least a first segment (116A) and a second segment (116B); and
rendering at least the first segment (116A) and the second segment (116B) within an interactive timeline user interface (302).

2. The method of claim 1, wherein the content capture generation component generates an individual content capture at a regular time interval.

3. The method of claim 1 or claim 2, wherein:
the first segment is associated with a first grouping of content captures; and
the second segment is associated with a second grouping of content captures.

4. The method of claim 3, wherein the sequence of content captures is a first sequence of content captures, the method further comprising:
determining that a third segment within a second sequence of content captures is substantially similar to the first segment based on a numerical representation of content captures within the third segment;
in response to determining that the third segment is substantially similar to the first segment, associating the third segment with the first grouping of content captures.

5. The method of claim 3, further comprising:
detecting an unassigned content capture within the first segment that is associated with an undetermined grouping of content captures;
determining that a number of content captures within the first segment associated with the first grouping of content captures satisfies a threshold number; and
in response to determining that the number of content captures within the first segment associated with the first grouping of content captures satisfies the threshold number, associating the unassigned content capture with the first grouping of content captures.

6. The method of any one of claim 1 through claim 5, wherein:
the first segment is rendered within the interactive timeline user interface in a first color; and
the second segment is rendered within the interactive timeline user interface in a second color.

7. The method of any one of claim 1 through claim 6, wherein the numerical representation of the individual content capture is a vector embedding of onscreen content and system metadata.

8. The method of any one of claim 1 through claim 7, further comprising:
receiving an external request for an additional analysis of the sequence of content captures; and
in response to the external request, providing the sequence of content captures to an advanced analysis model.

9. The method of any one of claim 1 through claim 8, further comprising:
assigning a first semantic profile to the first segment based on a semantic content of the first segment;
assigning a second semantic profile to the second segment based on a semantic content of the second segment;
detecting a third segment having the first semantic profile; and
rendering a suggestion interface element in association with the interactive timeline interface, the suggestion interface element surfacing a semantic relationship between the first segment and the third segment based on the first semantic profile.

10. A system for segmenting a sequence of content captures depicting a desktop environment based on a semantic relationship between individual content captures of the sequence of content captures, the system comprising:
a processing system; and
a computer-readable medium having encoded thereon computer-readable instructions that when executed by the processing system causes the system to perform operations comprising:
receiving the sequence of content captures (104A-104C) from a content capture generation component (106);
for an individual content capture (104A-104C)) of the sequence of content captures (104A-104C):
generating a numerical representation (110B) of a semantic content (106) depicted in the individual content capture (104B);
comparing the numerical representation (110B) of the individual content capture (104B) against a preceding numerical representation (110A) of a preceding content capture (104A) and a subsequent numerical representation (110C) of a subsequent content capture (104C);
calculating a difference metric (112) for the numerical representation (110B) of the individual content capture (104B) based on the comparison against the preceding numerical representation (110A) and the subsequent numerical representation (110C), wherein the difference metric (112) quantifies a level of change between the individual content capture (104B), the preceding content capture (104A), and the subsequent content capture (104C);
determining that the difference metric (112) for the individual content capture (104B) satisfies the threshold difference metric (114) indicating a substantive change in the desktop environment based on a comparison between the difference metric (112) and a threshold difference metric (114); and
in response to determining that the difference metric (112) for the individual content capture (104B) satisfies the threshold difference metric (114), partitioning the sequence of content captures (104A-104C) at the individual content capture (104B) into at least a first segment (116A) and a second segment (116B); and
rendering the first segment (116A) and the second segment (116B) within an interactive timeline user interface (302).

11. The system of claim 10, wherein:
the first segment is associated with a first grouping of content captures; and
the second segment is associated with a second grouping of content captures.

12. The system of claim 11, wherein the sequence of content captures is a first sequence of content captures, the operations further comprising:
determining that a third segment within a second sequence of content captures is substantially similar to the first segment based on a numerical representation of content captures within the third segment;
in response to determining that the third segment is substantially similar to the first segment, associating the third segment with the first grouping of content captures.

13. The system of claim 11, wherein the operations further comprise:
detecting an unassigned content capture within the first segment that is associated with an undetermined grouping of content captures;
determining that a number of content captures within the first segment associated with the first grouping of content captures satisfies a threshold number; and
in response to determining that the number of content captures within the first segment associated with the first grouping of content captures satisfies the threshold number, associating the unassigned content capture with the first grouping of content captures.

14. The system of any one of claim 10 through 13, wherein the operations further comprise:
assigning a first semantic profile to the first segment based on a semantic content of the first segment;
assigning a second semantic profile to the second segment based on a semantic content of the second segment;
detecting a third segment having the first semantic profile; and
rendering a suggestion interface element in association with the interactive timeline interface, the suggestion interface element surfacing a semantic relationship between the first segment and the third segment based on the first semantic profile.

15. A computer-readable storage medium having encoded thereon, computer-readable instructions that when executed by a system cause the system to perform operations comprising:
receiving the sequence of content captures (104A-104C) from a content capture generation component (106);
for an individual content capture (104A-104C) of the sequence of content captures (104A-104C):
generating a numerical representation (110B) of a semantic content (106) depicted in the individual content capture (104B);
comparing the numerical representation (110B) of the individual content capture (104B) against a preceding numerical representation (110A) of a preceding content capture (104A);
calculating a difference metric (112) for the numerical representation (110B) of the individual content capture (104B) based on the comparison against the preceding numerical representation (110A), wherein the difference metric (112) quantifies a level of change between the individual content capture (104B) and the preceding content capture (104A);
determining that the difference metric (112) for the individual content capture (104B) satisfies the threshold difference metric (114) indicating a substantive change in the desktop environment based on a comparison between the difference metric (112) and a threshold difference metric (114);
in response to determining that the difference metric (112) for the individual content capture (104B) satisfies the threshold difference metric (114), partitioning the sequence of content captures (104A-104C) at the individual content capture (104B) into at least a first segment (116A) and a second segment (116B); and
rendering the first segment (116A) and the second segment (116B) within an interactive timeline user interface (302).
